# EUROPEAN PATENT SPECIFICATION

(11) **EP 2 857 538 B1**
(45) Date of publication and mention of the grant of the patent: **18.04.2018**
(21) Application number: 13796603.2
(22) Date of filing: 23.05.2013
(51) Int. Cl.: C21D 6/00, C22C 38/40, F01N 13/00, F01N 13/16, C22C 38/52, C22C 38/00, C22C 38/02, C22C 38/04, C22C 38/06, C22C 38/42, C22C 38/44, C22C 38/46, C22C 38/48, C22C 38/50, C22C 38/54, C21D 9/46, C21D 7/13, C21D 8/02, G01N 3/32

(54) **FERRITIC STAINLESS STEEL**
FERRITISCHER EDELSTAHL
ACIER INOXYDABLE FERRITIQUE

(30) Priority: 28.05.2012 JP 2012120531; 24.09.2012 JP 2012209012
(43) Date of publication of application: 08.04.2015
(73) Proprietor: JFE Steel Corporation, Tokyo, 100-0011 (JP)
(72) Inventor: NAKAMURA, Tetsuyuki, Tokyo 100-0011 (JP); OTA, Hiroki, Tokyo 100-0011 (JP); OGATA, Hiroyuki, Tokyo 100-0011 (JP)
(74) Representative: Grünecker Patent- und Rechtsanwälte PartG mbB
(86) International application number: PCT/JP2013/003282
(87) International publication number: WO 2013/179616

(56) References cited:
- EP-A1- 1 108 802
- EP-A1- 1 170 392
- EP-A1- 1 818 421
- WO-A1-2009/017246
- JP-A- H08 104 950
- JP-A- H08 104 950
- JP-A- H10 251 759
- JP-A- 2007 254 763
- JP-A- 2010 235 994
- JP-A- 2010 235 994
- JP-A- 2012 102 397
- JP-B2- 3 290 751
- US-A1- 2006 163 231

## Description

### [Technical Field]

The present invention relates to ferritic stainless steel having excellent scale adhesion and thermal fatigue properties.

### [Background Art]

Of automobile exhaust system components, in particular, an exhaust manifold, which is directly connected to an engine, is used under severe conditions where the maximum service temperature reaches as high as 800°C to 900°C. Because of the need of excellent thermal fatigue properties, ferritic stainless steel containing niobium is mainly used as the material. The temperatures experienced by the exhaust manifolds have been increased, particularly in recent years, due to the trends for higher fuel efficiency and clean exhaust gas to cope with environmental issues. Thus, there has been a demand for a further improvement in the thermal fatigue properties of stainless steel that is the material.

Niobium added to ferritic stainless steel improves thermal fatigue properties by being dissolved in the steel so as to increase strength at high temperatures. However, niobium easily forms carbonitride with carbon and nitrogen present in the steel. Consequently, it is often the case that the amount of solute niobium is decreased and low thermal fatigue properties are caused. Simple increasing in the amount of niobium added to solve this problem results in a deterioration in the workability of steel. Therefore, titanium that has a higher affinity for carbon and nitrogen than that of niobium is added in combination with niobium to induce carbon and nitrogen to form titanium carbonitride, thus preventing the formation of niobium carbonitride. A typical example of such steels involving the combined addition of niobium and titanium is Type 441 ferritic stainless steel (18% Cr-0.5% Nb-0.2% Ti) (EN10088-2:EN1.4509). This steel is widely used for automobile exhaust manifolds.

However, the Nb-Ti complex-added ferritic stainless steels tend to problematically incur the spalling of scales (oxide films) when they experience repeated cycles of high-temperature heating and cooling, namely, cyclic oxidation. Because exhaust manifolds are subjected to severe cyclic oxidation conditions due to the repetition of heating and rapid cooling each time the engine is started and stopped, the spalling of scales exposes the base steel directly to the high-temperature exhaust gas and thus causes oxidation to proceed further, resulting in a reduction of sheet thickness and potentially resulting in pitting or deformation. Further, cracks may occur starting from portions from which scales have spalled. Thus, the Nb-Ti complex-added ferritic stainless steels are also required to have excellent scale adhesion preventing the spalling of scales.

To improve the high-temperature strength and the thermal fatigue properties of the Nb-Ti complex-added ferritic stainless steels, Patent Literatures 1 and 2 disclose the addition of molybdenum, and Patent Literatures 3 to 5 disclose the addition of molybdenum, copper and tungsten. To improve scale adhesion, Patent Literature 3 discloses the addition of rare earth metals, calcium, yttrium and zirconium, and Patent Literature 5 discloses the addition of rare earth metals and calcium.

EP 1 170 392 A1 discloses a ferritic stainless steel having superior high temperature fatigue resistance comprising 11.0 to 20.0% of Cr, 0.1% to 1.0% Ni and 1.0 to 2.0% Mo. JP H08104950 discloses a ferritic stainless steel with 11 to 30% of Cr, 0.2 to 0.7% of Nb, 0.1 - 1.0% of Ti, up to 2.0% of Mn and up to 1.5% of Si.

### [Citation List]

### [Patent Literature]

[PTL 1] Japanese Unexamined Patent Application Publication No. 4-224657
[PTL 2] Japanese Unexamined Patent Application Publication No. 5-70897
[PTL 3] Japanese Unexamined Patent Application Publication No. 2004-218013
[PTL 4] Japanese Unexamined Patent Application Publication No. 2008-240143
[PTL 5] Japanese Unexamined Patent Application Publication No. 2009-174040

### [Summary of Invention]

### [Technical Problem]

However, molybdenum and tungsten are expensive and have drawbacks in that the use thereof not only increases the occurrence of surface defects (such as so-called scabs) on steel sheets but also deteriorates workability. The addition of copper disadvantageously causes a significant deterioration in workability at normal temperature and also deteriorates oxidation resistance. Further, rare earth metals, calcium, yttrium and zirconium have drawback in that the addition thereof increases the occurrence of surface defects on steel sheets.

The present invention has been made to solve the problems described above. It is therefore an object of the invention to provide ferritic stainless steel achieving excellent scale adhesion and thermal fatigue properties without deteriorations in surface properties.

### [Solution to Problem]

The present inventors have studied the scale adhesion of Nb-Ti complex-added ferritic stainless steels, and have found that the addition of an appropriate amount of nickel improves scale adhesion and thus makes it possible to prevent scale spalling.

Further, the present inventors have studied the thermal fatigue properties of Nb-Ti complex-added ferritic stainless steels. While Patent Literature 1 or 2 discloses that cobalt improves the toughness of welds, the present inventors have also found that the addition of an appropriate amount of cobalt provides excellent thermal fatigue properties. By the findings, ferritic stainless steel exhibiting excellent scale adhesion and thermal fatigue properties may be obtained without causing deteriorations in surface properties.

The present invention has been made based on the above findings. A summary of the invention is as follows.
[1] A ferritic stainless steel including, by mass%, C: not more than 0.020%, Si: not more than 1.0%, Mn: not more than 1.0%, P: not more than 0.040%, S: not more than 0.030%, Cr: 16.0% to 20.0%, N: not more than 0.020%, Nb: 0.40% to 0.80%, Ti: from 4 × (C% + N%)% to 0.50% wherein C% and N% indicate the C content and the N content (mass%), respectively, Al: less than 0.20%, Ni: 0.05% to 0.40%, and Co: 0.01% to 0.30%, the balance being Fe and inevitable impurities.
[2] The ferritic stainless steel described in [1], further including, by mass%, one or more selected from Ca: 0.0005% to 0.0030%, Mg: 0.0002% to 0.0020%, and B: 0.0002% to 0.0020%.
[3] The ferritic stainless steel described in [1] or [2], further including, by mass%, one or more selected from Mo: 0.02% to less than 0.10%, Cu: 0.01% to less than 0.20%, V: 0.01% to less than 0.50%, and W: 0.02% to less than 0.30%.

### [Advantageous Effects of Invention]

According to the present invention, ferritic stainless steels exhibiting excellent scale adhesion and thermal fatigue properties may be obtained. The inventive ferritic stainless steels also have excellent surface properties. By virtue of the excellent scale adhesion and thermal fatigue properties, the ferritic stainless steels of the invention may be suitably used for automobile exhaust system components.

### [Brief Description of Drawings]

[Fig. 1] Fig. 1 is a view illustrating a thermal fatigue test specimen.
[Fig. 2] Fig. 2 is a diagram illustrating temperature conditions and restraint conditions in a thermal fatigue test.

### [Description of Embodiments]

Hereinbelow, the reasons why the chemical composition of the inventive steel is specified will be described. The unit % for the components indicates mass% at each occurrence unless otherwise mentioned.

### C: not more than 0.020%

Carbon is an effective element for increasing the strength of steel. This effect may be obtained when the C content is 0.001% or more. Thus, the C content is preferably 0.001% or more. On the other hand, scale spalling occurs if more than 0.020% carbon is contained. Thus, the C content is limited to not more than 0.020%. In order to ensure workability, a lower C content is more preferable. Thus, the C content is preferably not more than 0.015%, and is more preferably in the range of 0.004% to 0.008%.

### Si: not more than 1.0%

Silicon is an effective element for increasing oxidation resistance. This effect may be obtained by adding 0.01% or more silicon. Thus, the Si content is preferably 0.01% or more. On the other hand, workability is deteriorated if more than 1.0% silicon is added. Thus, the Si content is limited to not more than 1.0%. The Si content is preferably in the range of from more than 0.3% to not more than 0.6%.

### Mn: not more than 1.0%

Manganese is an element that increases the strength of steel and also serves as a deoxidizer. These effects may be obtained by adding 0.01% or more manganese. Thus, the Mn content is preferably 0.01% or more. On the other hand, the weight gain by oxidation is significantly increased and oxidation resistance is lowered if more than 1.0% manganese is added. Thus, the Mn content is limited to not more than 1.0%. The Mn content is preferably in the range of 0.2% to 0.6%.

### P: not more than 0.040%

Phosphorus is an element which causes a deterioration in toughness, and therefore its content is desirably small. Thus, the P content is limited to not more than 0.040%. The P content is preferably not more than 0.035%, and more preferably not more than 0.030%.

### S: not more than 0.030%

Sulfur deteriorates formability and corrosion resistance, and therefore its content is desirably small. Thus, the S content is limited to not more than 0.030%. The S content is preferably not more than 0.006%, and more preferably not more than 0.003%.

### Cr: 16.0% to 20.0%

Chromium is an element which is necessary for improving oxidation resistance. To obtain good oxidation resistance, the addition of 16.0% or more chromium is required. On the other hand, the addition of more than 20.0% chromium makes the steel hard and results in deteriorations in productivity and workability. Thus, the Cr content is limited to not more than 20.0%. The Cr content is preferably in the range of 17.0% to 19.0%.

### N: not more than 0.020%

Nitrogen deteriorates the toughness and the formability of steel, and therefore its content is desirably small. Thus, the N content is limited to not more than 0.020%. The N content is preferably not more than 0.015%, and more preferably not more than 0.012%.

### Nb: 0.40% to 0.80%

Niobium is an element that significantly increases high-temperature strength by solid solution strengthening and thereby improves thermal fatigue properties. This effect may be obtained by adding 0.40% or more niobium. On the other hand, the addition of an excessively large amount of niobium exceeding 0.80% not only deteriorates the toughness of steel but also results in the formation of a Laves phase (Fe₂Nb) at high temperatures and a consequent decrease in high-temperature strength. Thus, the Nb content is limited to notmore than 0.80%.

### Ti: from 4 x (C% + N%)% to 0.50% wherein C% and N% indicate the C content and the N content (mass%), respectively

Titanium prevents the formation of niobium carbonitride by preferentially combining with carbon and nitrogen to form the carbonitride, and also enhances corrosion resistance, formability and intergranular corrosion resistance at welds. In order to obtain these effects, the amount of titanium added needs to be at least 4 x (C% + N%)%. Below this amount, carbon and nitrogen cannot be fixed completely in the formation of titanium carbonitride but will form niobium carbonitride. Consequently, the amount of solute niobium is deteriorated and thermal fatigue properties are deteriorated. On the other hand, adding an excessively large amount of titanium results in a deterioration in the toughness of steel. Thus, the Ti content is limited to not more than 0.50%. The Ti content is preferably from 5 × (C% + N%)% to 0.30%, and more preferably from 0.10% to 0.25%.

### Al: less than 0.20%

Aluminum is an element that is effective for deoxidation. This effect may be obtained by adding 0.01% or more aluminum. Thus, the Al content is preferably not less than 0.01%. On the other hand, the Al content is limited to less than 0.20% because otherwise the steel becomes hardened and exhibits poor workability. The Al content is preferably 0.01% to 0.10%, and more preferably 0.02% to 0.06%.

### Ni: 0.05% to 0.40%

Nickel is an important element in order to ensure scale adhesion in the invention. For this purpose, it is necessary that 0.05% or more nickel be added. As will be described later, the inventive steel exhibits a lowered thermal expansion coefficient due to the addition of an appropriate amount of cobalt. Consequently, the above effect may be obtained by adding a smaller amount of nickel as compared to cobalt-free steel or low-cobalt steel. On the other hand, nickel is expensive and also deteriorates scale adhesion by forming a γ phase at high temperatures when more than 0.40% nickel is added. Thus, the amount in which nickel is added is limited to the range of 0.05% to 0.40%, and is preferably in the range of 0.10% to 0.30%, and more preferably in the range of 0.20% to 0.30%.

### Co: 0.01% to 0.30%

Cobalt is an important element in the invention. This element is necessary to enhance thermal fatigue properties. For this purpose, at least 0.01% or more cobalt needs to be added. Cobalt decreases the thermal expansion coefficient of steel and consequently the amount of expansion during heating is reduced. That is, improved thermal fatigue properties may be achieved by decreasing the amount of strain caused during heating and cooling. As a result of the decrease in the thermal expansion coefficient of steel, the difference in thermal expansion coefficient between the steel and scales becomes small and the scales are unlikely to spalle during cooling. In this manner, cobalt effectively allows for the prevention of scale spalling by the addition of a smaller amount of nickel. If more than 0.10% cobalt is added, on the other hand, cobalt is concentrated at the interface between the oxide film and the base steel, thus decreasing scale adhesion. Above 0.30%, this side effect of interfacial concentration cancels the scale spalling prevention effect provided by the decrease in thermal expansion coefficient, and scales are caused to spalle during cooling. Thus, the Co content is limited to not more than 0.30%, and is more preferably in the range of 0.02% to 0.10%, and still more preferably in the range of 0.03% to 0.10%.

The present invention resides in the ferritic stainless steels with excellent scale adhesion and thermal fatigue properties that contain the aforementioned essential components with the balance being iron and inevitable impurities. Where appropriate, it is possible to further add one or more selected from calcium, magnesium and boron, and to add one or more selected from molybdenum, copper, vanadium and tungsten in the following amounts.

### Ca: 0.0005% to 0.0030%

Calcium is a component that is effective for preventing the clogging of nozzles with precipitates of Ti-containing inclusions that are prone to occur during continuous casting. This effect may be obtained by adding 0.0005% or more calcium. On the other hand, the Ca content is to be not more than 0.0030% in order to obtain good surface properties without the occurrence of surface defects. Thus, the content of calcium, when added, is limited to the range of 0.0005% to 0.0030%, and is more preferably in the range of 0.0005% to 0.0020%, and is still more preferably in the range of 0.0005% to 0.0015%.

### Mg: 0.0002% to 0.0020%

Magnesium is an element that increases the equiaxed crystal ratio of slab and is effective for enhancing workability and toughness. Further, this element is effective for suppressing the coarsening of niobium carbonitride and titanium carbonitride. Coarse titanium carbonitride serves as a starting point of brittle crack and thus toughness is lowered. The coarsening of niobium carbonitride decreases the amount of solute niobium in steel, resulting in a deterioration in thermal fatigue properties. The above effects may be obtained by adding 0.0002% or more magnesium. On the other hand, the addition of magnesium in an amount exceeding 0.0020% deteriorates the surface properties of steel. Thus, the content of magnesium, when added, is limited to the range of 0.0002% to 0.0020%, and is preferably in the range of 0.0002% to 0.0015%, and more preferably in the range of 0.0004% to 0.0010%.

### B: 0.0002% to 0.0020%

Boron is an element that is effective for enhancing workability, in particular secondary workability. This effect may be obtained by adding 0.0002% or more boron. On the other hand, the addition of boron in an amount exceeding 0.0020% deteriorates the workability and the toughness of steel, and therefore the amount is to be 0.0020% or less. Thus, the content of boron, when added, is limited to the range of 0.0002% to 0.0020%, and is preferably in the range of 0.0003% to 0.0010%.

### Mo: 0.02% to less than 0.10%

Molybdenum is an element that increases the strength of steel by solid solution strengthening, thus enhancing thermal fatigue properties. This effect may be obtained by adding 0.02% or more molybdenum. In addition to its expensiveness, the addition of a large amount of molybdenum not only causes the occurrence of surface defects but also results in a deterioration in workability. To obtain good surface properties and good workability, the amount is to be less than 0.10%. Thus, the content of molybdenum, when added, is limited to the range of 0.02% to less than 0.10%, and is preferably in the range of 0.04% to less than 0.10%.

### Cu: 0.01% to less than 0.20%

Copper strengthens steel by precipitating as ε-Cu, thus enhancing thermal fatigue properties. To obtain this effect, 0.01% or more copper needs to be added. On the other hand, the addition of 0.20% or more copper makes the steel hard and results in a deterioration in workability. To obtain good workability, the amount is to be less than 0.20%. Thus, the content of copper, when added, is limited to the range of 0.01% to less than 0.20%, and is preferably in the range of 0.01% to less than 0.10%.

### V: 0.01% to less than 0.50%

Vanadium is an effective element for increasing high-temperature strength. This effect may be obtained by adding 0.01% or more vanadium. On the other hand, the addition of 0.50% or more vanadium results in the precipitation of coarse V(C, N) and causes a deterioration in toughness. Thus, the content of vanadium, when added, is limited to the range of 0.01% to less than 0.50%, and is preferably in the range of 0.02% to less than 0.20%.

### W: 0.02% to less than 0.30%

Similarly to molybdenum, tungsten increases the strength of steel by solid solution strengthening. This effect may be obtained by adding 0.02% or more tungsten. However, this element is expensive and the addition of a large amount of tungsten not only causes the occurrence of surface defects but also results in a significant deterioration in workability. To obtain good surface properties and good workability, the amount is to be less than 0.30%. Thus, the content of tungsten, when added, is limited to the range of 0.02% to less than 0.30%.

Next, a method for manufacturing the inventive ferritic stainless steels will be described.

The ferritic stainless steel of the invention may be manufactured by a usual stainless steel production method. In a recommended method, a steel having the aforementioned chemical composition is smelted in a melting furnace such as a converter furnace or an electric furnace, then subjected to secondary refining such as ladle refining or vacuum refining, and processed into a steel piece (a slab) by a continuous casting method or an ingot casting-slabbing method; the slab is then hot rolled, and the hot-rolled sheet is annealed and pickled to give a hot-rolled, annealed and pickled sheet; and the steel sheet is further subjected to steps such as cold rolling, finish annealing and pickling, thereby producing a cold-rolled and annealed sheet. An example will be described below.

A steel is refined in a furnace such as a converter furnace or an electric furnace, and subjected to secondary refining by an AOD method or a VOD method to produce a molten steel having the aforementioned chemical composition. The steel is processed by a continuous casting method into a slab. The slab is heated to 1000 to 1250°C and is hot rolled into a hot-rolled sheet having a desired sheet thickness. The hot-rolled sheet is continuously annealed at a temperature of 900°C to 1100°C and is thereafter descaled by shot blasting and pickling to give a hot-rolled, annealed and pickled sheet. The hot-rolled, annealed and pickled sheet may be directly used in applications of interest in the invention such as exhaust manifolds. Alternatively, the steel sheet may be further subjected to cold rolling, annealing and pickling to produce a cold-rolled, annealed and pickled sheet. This cold rolling step may involve two or more cold rolling process including process annealing as required. In the cold rolling step, the total rolling reduction by one or more passes through cold rolls is not less than 60%, and preferably not less than 70%. The annealing temperature for the cold-rolled sheet is 900°C to 1150°C, and preferably 950°C to 1100°C. In accordance with applications, the steel sheet may be subjected to light rolling (such as skin-pass rolling) after pickling to control the shape and the quality of the steel sheet. Further, the steel sheet may be annealed in a reducing atmosphere containing hydrogen to give a BA(Bright Annealing)-finished steel without pickling.

The hot-rolled and annealed sheet products or the cold-rolled and annealed sheet products manufactured as described above are processed, for example, bent in accordance with the use applications to form shapes such as automobile or motorcycle exhaust pipes or catalytic cylinders, exhaust air ducts in thermal power plants, and fuel cell-related components. Welding of these parts may be performed by any welding methods without limitation, and possible options are various arc welding methods such as TIG, MIG and MAG, resistance welding methods such as spot welding and seam welding, high-frequency resistance welding methods such as electric resistance welding, and high-frequency induction welding methods.

### [EXAMPLES]

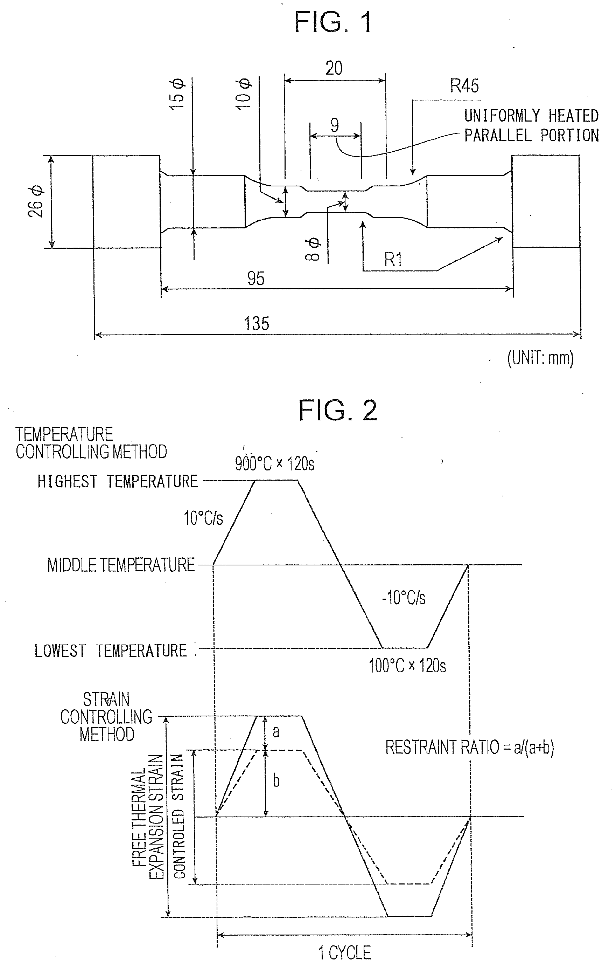

Steel Nos. 1 to 37 with chemical compositions shown in Table 1 and Table 2 were smelted in a vacuum melting furnace and cast into steel ingots weighing 30 kg. Next, the ingots were heated to 1170°C and hot rolled into sheet bars 35 mm in thickness and 150 mm in width. Each of the sheet bars was divided into two sheet bars. One of the two sheet bars was forged into a square bar having a 30 mm × 30 mm cross section. The bar was then annealed in the range of 950°C to 1050°C and was thereafter machined into a thermal fatigue test specimen illustrated in Fig. 1. The test specimen was subjected to a thermal fatigue test described later. The annealing temperature was controlled in the range of 950°C to 1050°C with respect to each steel while identifying the microstructure. The same applies to the annealing described hereinafter.

The other of the two sheet bars was heated to 1050°C and was thereafter hot rolled into a hot-rolled sheet with a sheet thickness of 5 mm. Thereafter, the hot-rolled sheet was annealed in the temperature range of 900°C to 1050°C and was pickled to produce a hot-rolled and annealed sheet. At this stage, the surface properties of the steel sheet were visually observed. The steel sheet was then cold rolled to a sheet thickness of 2 mm and was subjected to finish annealing in the temperature range of 900°C to 1050°C, thereby producing a cold-rolled and annealed sheet. This steel sheet was subjected to the following cyclic oxidation test.

### < Cyclic oxidation test>

A sample 20 mm in width and 30 mm in length was cut out from the cold-rolled and annealed sheet, and all the six surfaces were polished with #320 emery paper. The sample was then tested under oxidation test conditions in which the sample was subjected to 400 cycles in which it was held at 1000°C for 20 minutes and at 100°C for 1 minute in the air atmosphere. The heating rate and the cooling rate were 5°C/sec and 1.5°C/sec, respectively. After the test, the presence or absence of the spalling of scales was visually inspected to evaluate scale adhesion. The obtained results are described in Table 1 and Table 2.

### <Thermal fatigue test>

The thermal fatigue test specimen was subjected to repeated heating and cooling between 100°C and 900°C and was simultaneously caused to undergo repeated applications of strain with a restraint ratio of 0.6 as shown in Fig. 2, thereby measuring the thermal fatigue lifetime. The measurement was performed by a method in accordance with the standard for high temperature low cycle testing (JSMS-SD-7-03) published from The Society of Materials Science, Japan. First, the load that was detected at 100°C in each cycle was divided by the sectional area (50.3 mm²) of a uniformly heated parallel portion parallel portion of the test specimen illustrated in Fig. 1, and the quotient was obtained as the stress in that cycle. The thermal fatigue lifetime was defined as the number of cycles repeated until the stress in a certain cycle decreased to 75% of the initial stress (in the fifth cycle where the test piece came to exhibit stable behavior). The thermal fatigue properties were evaluated based on the number of cycles as the lifetime. The obtained results are described in Table 1 and Table 2.

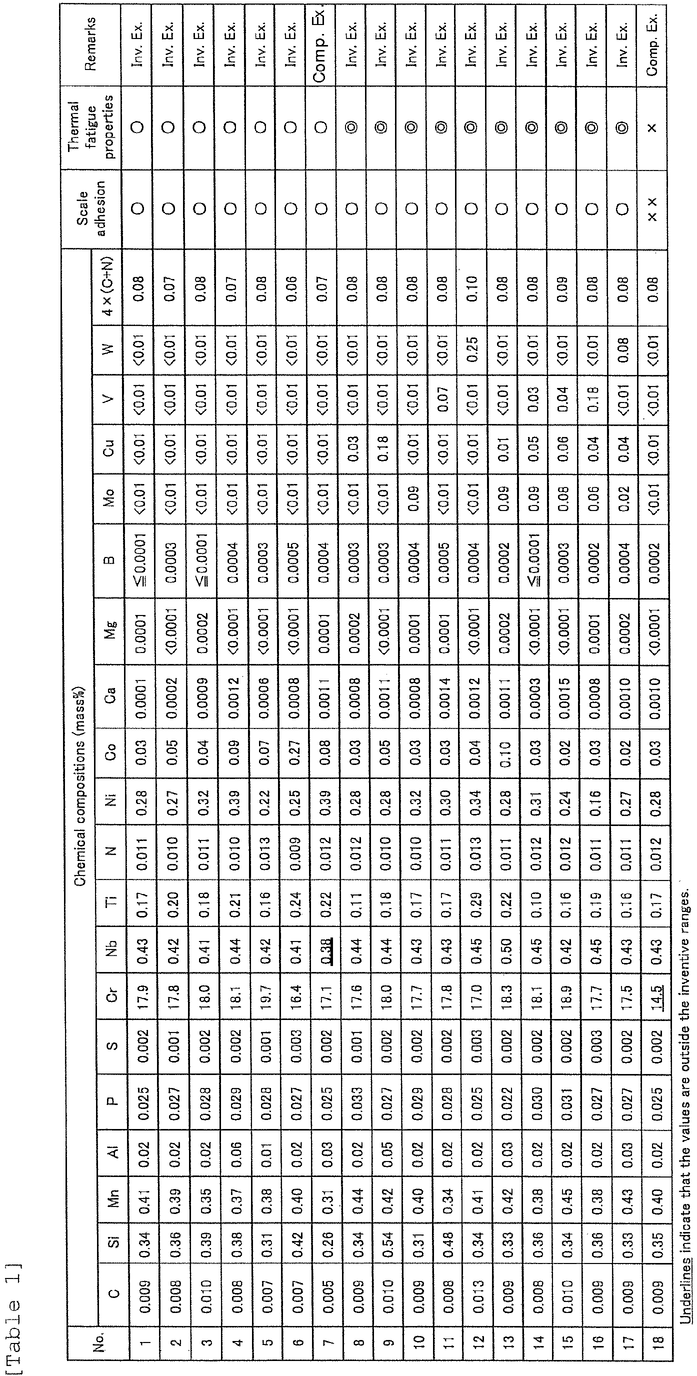

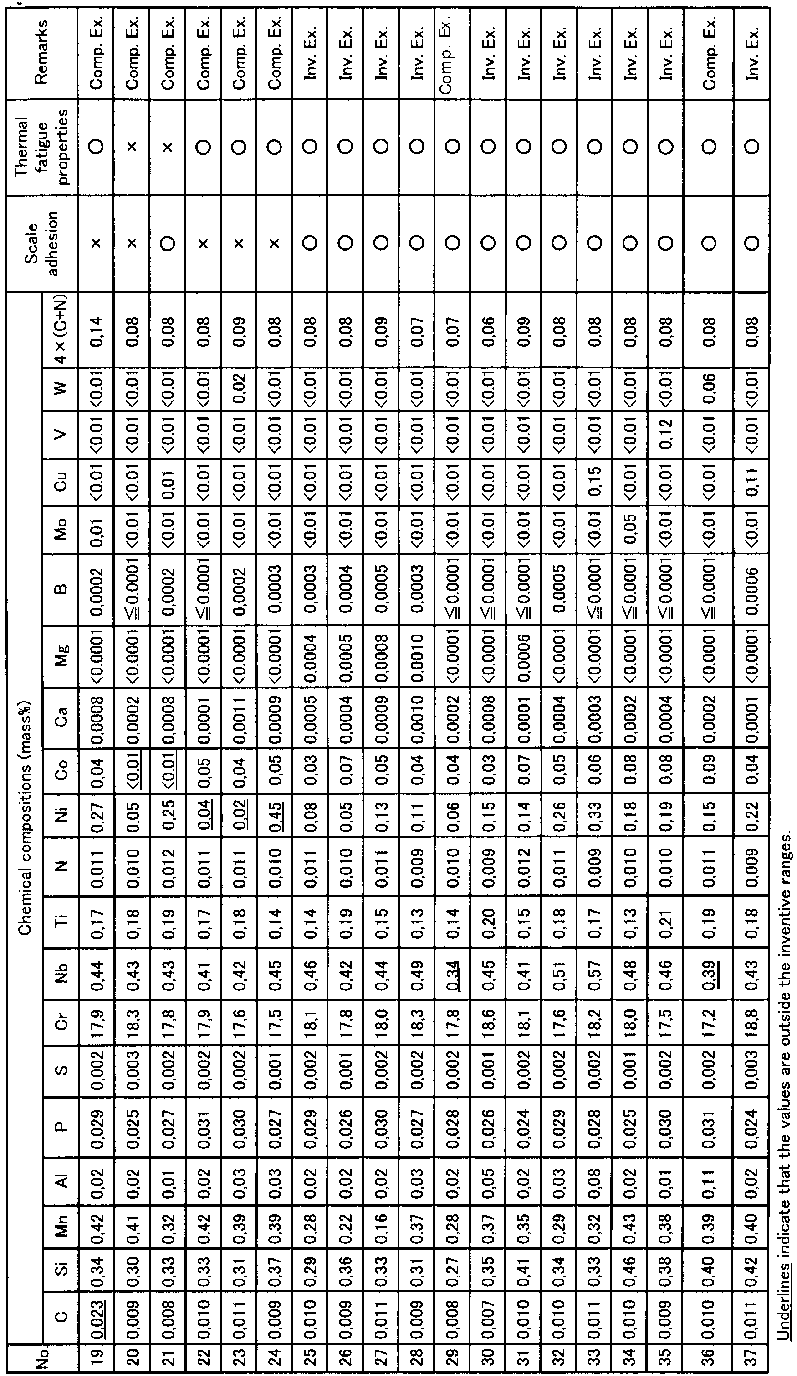

In Table 1 and Table 2, the criteria in the tests are as follows.
(1) Scale adhesion: The surface of the test piece after the cyclic oxidation test was evaluated as ○ (satisfactory) when the area of scale spalling was less than 5%, × (unsatisfactory) when the area of scale spalling was 5% or more, and ×× (unsatisfactory) when there was breakway oxidation.
(2) Thermal fatigue properties: The thermal fatigue properties were evaluated as ⊚ (satisfactory, particularly excellent) when the thermal fatigue lifetime was 600 cycles or more, ○ (satisfactory) when the thermal fatigue lifetime was 540 to less than 600 cycles, and × (unsatisfactory) when the thermal fatigue lifetime was less than 540 cycles.

From Table 1 and Table 2, all the steel Nos. 1 to 17 and Nos. 25 to 37 representing Inventive Examples exhibited excellent scale adhesion and thermal fatigue properties. In particular, the inventive steel Nos. 8 to 17 which contained one or more of molybdenum, copper, vanadium and tungsten achieved particularly excellent thermal fatigue properties. Further, all the hot-rolled, annealed and pickled sheets in Inventive Examples had good surface properties without any surface defects.

In contrast, breakway oxidation occurred in Comparative Example No. 18 in which the Cr content was 14.5% and was below the inventive range. Comparative Example No. 19 in which the C content was 0.023% and exceeded the inventive range resulted in scale spalling and failed to pass the scale adhesion test. Due to the less than 0.01% Co content below the inventive range, the comparative steel No. 20 corresponding to Type 441 steel failed to pass the thermal fatigue test and also failed to pass the scale adhesion test in spite of the fact that 0.05% nickel had been added. In Comparative Example No. 21, the Co content was less than 0.01% and was below the inventive range, resulting in a failure to pass the thermal fatigue test. The steels failed to pass the scale adhesion test in Comparative Example Nos. 22 and 23 in which the Ni content was 0.04% or 0.02% and was below the inventive range, Comparative Example No. 24 in which the Ni content was 0.45% and exceeded the inventive range, and Comparative Example No. 29 in which the Co content was 0.32% and exceeded the inventive range.

From the foregoing, it is apparent that the steels of the invention have excellent scale adhesion and thermal fatigue properties.

### [Industrial Applicability]

The ferritic stainless steels of the present invention are excellent in scale adhesion and thermal fatigue properties and are suited for exhaust system components in automobiles and other machines, such as exhaust manifolds, various exhaust pipes, converter cases and mufflers. Further, the inventive steels are also suited for exhaust system components in thermal power generation systems, and fuel cell parts.

## Claims

1. A ferritic stainless steel consisting of, by mass%, C: not more than 0.020%, Si: not more than 1.0%, Mn: not more than 1.0%, P: not more than 0.040%, S: not more than 0.030%, Cr: 16.0% to 20.0%, N: not more than 0.020%, Nb: 0.40% to 0.80%, Ti: from 4 × (C% + N%)% to 0.50% wherein C% and N% indicate the C content and the N content (mass%), respectively, Al: less than 0.20%, Ni: 0.05% to 0.40%, and Co: 0.01% to 0.30%, optionally one or more selected from Ca: 0.0005% to 0.0030%, Mg: 0.0002% to 0.0020%, B: 0.0002% to 0.0010%, Mo: 0.02% to less than 0.10%, Cu: 0.01% to less than 0.20%, V: 0.01% to less than 0.20%, and W: 0.02% to less than 0.30%, the balance being Fe and inevitable impurities.

## Patentansprüche

1. Ferritischer Edelstahl, der nach Ma% aus Folgendem besteht: C: nicht mehr als 0,020 %, Si: nicht mehr als 1,0 %, Mn: nicht mehr als 1,0 %, P: nicht mehr als 0,040 %, S: nicht mehr als 0,030 %, Cr: 16,0 % bis 20,0 %, N: nicht mehr als 0,020 %, Nb: 0,40 % bis 0,80 %, Ti: von 4 x (C% + N%) bis 0,50 %, wobei C% und N% den C-Gehalt bzw. den N-Gehalt (Ma%) anzeigen, Al: weniger als 0,20 %, Ni: 0,05 % bis 0,40 %, und Co: 0,01 % bis 0,30 %, optional eines oder mehrere, die aus Folgendem gewählt werden: Ca: 0,0005 % bis 0,0030 %, Mg: 0,0002 % bis 0,0020 %, B: 0,0002 % bis 0,0010 %, Mo: 0,02 % bis weniger als 0,10 %, Cu: 0,01 % bis weniger als 0,20 %, V: 0,01 bis weniger als 0,20 %, und W: 0,02 % bis weniger als 0,30 %, wobei der Rest Fe und unvermeidbare Verunreinigungen sind.

## Revendications

1. Acier inoxydable ferritique constitué, en % massique, de C : pas plus de 0,020 %, Si : pas plus de 1,0 %, Mn : pas plus de 1,0 %, P : pas plus de 0,040 %, S : pas plus de 0,030 %, Cr : de 16,0 % à 20,0 %, N : pas plus de 0,020 %, Nb : de 0,40 % à 0,80 %, Ti : de 4 x (C% + N%) % à 0,50 % où C% et N% indiquent respectivement la teneur en C et la teneur en N (% massique), Al : moins de 0,20 %, Ni : de 0,05 % à 0,40 % et Co : de 0,01 % à 0,30 %, éventuellement l'un ou plusieurs choisis parmi Ca : de 0,0005 % à 0,0030 %, Mg : de 0,0002 % à 0,0020 %, B : de 0,0002 % à 0,0010 %, Mo : de 0,02 % à moins de 0,10 %, Cu : de 0,01 % à moins de 0,20 %, V : de 0,01 % à moins de 0,20 % et W : de 0,02 % à moins de 0,30 %, le reste étant du Fe et des impuretés inévitables.
